(19) Europäisches Patentamt
European Patent Office
Office européen des brevets

(11) **EP 3 052 958 B1**

(12) **FASCICULE DE BREVET EUROPEEN**

(45) Date de publication et mention de la délivrance du brevet:
**20.11.2019 Bulletin 2019/47**

(21) Numéro de dépôt: **14777580.3**

(22) Date de dépôt: **29.09.2014**

(51) Int Cl.:
***G01S 3/808*** (2006.01)

(86) Numéro de dépôt international:
**PCT/EP2014/070783**

(87) Numéro de publication internationale:
**WO 2015/049199 (09.04.2015 Gazette 2015/14)**

(54) **PROCEDE DE LOCALISATION D'UNE SOURCE SONORE ET ROBOT HUMANOIDE UTILISANT UN TEL PROCEDE**

VERFAHREN ZUR POSITIONSBESTIMMUNG EINER SCHALLQUELLE UND HUMANOIDER ROBOTER ZUR DURCHFÜHRUNG DES VERFAHRENS

METHOD FOR LOCATING A SOUND SOURCE, AND HUMANOID ROBOT USING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2013 FR 1359515**

(43) Date de publication de la demande:
**10.08.2016 Bulletin 2016/32**

(73) Titulaire: **Softbank Robotics Europe**
**75015 Paris (FR)**

(72) Inventeur: **RUMP, Grégory**
**F-75013 Paris (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**EP-A1- 1 818 909**

• **JACEK DMOCHOWSKI ET AL: "Fast steered response power source localization using inverse mapping of relative delays", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 mars 2008 (2008-03-31), pages 289-292, XP031250545, ISBN: 978-1-4244-1483-3**

**Description**

L'invention porte sur un procédé pour la localisation spatiale d'une source sonore, ainsi que sur un robot humanoïde pouvant mettre en œuvre et utiliser un tel procédé.

La localisation spatiale d'une source sonore est nécessaire dans des nombreuses applications notamment, mais pas exclusivement, en robotique humanoïde.

Un robot peut être qualifié d'humanoïde dès lors qu'il possède certains attributs de l'apparence et des fonctionnalités de l'homme : une tête, un tronc, deux bras, éventuellement deux jambes, etc. Généralement, on demande à un robot humanoïde de pouvoir interagir avec des êtres humains de façon aussi « naturelle » que possible, en s'apercevant de la présence d'une personne, en comprenant son langage, en engageant une conversation avec elle, etc. Une capacité de localisation de sources sonores est très utile, voire nécessaire, pour atteindre ce but. En effet, une telle capacité peut permettre à un robot humanoïde de déterminer la direction dont provient un son et tourner sa tête vers cette direction ; si le son a été produit par une personne, le robot peut alors activer un logiciel de reconnaissance des visages, configurer de manière optimale un système de reconnaissance vocale, suivre « du regard » les déplacements de cette personne, etc.

Plusieurs procédés et systèmes de localisation spatiale d'une ou plusieurs sources sonores sont connus de l'art antérieur. Ces procédés et systèmes se basent généralement sur une pluralité de microphones peu ou pas directifs et sur un traitement numérique des signaux captés par lesdits microphones.

L'article de J. DiBiase et al. « Robust localization in reverberant rooms » dans l'ouvrage « Microphone Arrays: Signal Processing Techniques and Applications » publié sous la direction de M. S. Brandstein et D. B. Ward par Springer-Verlag, 2001, Berlin, Allemagne, décrit trois approches principales à la localisation d'une source sonore.

- Une première approche utilise des techniques d'estimation spectrale, basées sur la matrice de corrélation des signaux captés par les microphones. Les méthodes basées sur cette approche tendent à être sensibles aux erreurs de modèles et très demandeuses de puissance de calcul. Elles conviennent principalement pour des signaux à bande étroite.

- Une deuxième approche se base sur l'estimation des décalages temporels entre les signaux sonores reçus par des paires de microphones (TDOA, pour « Time Différence Of Arrival », c'est-à-dire « différence de temps d'arrivée »). Ces estimations sont utilisées, avec la connaissance des positions des microphones, pour calculer des courbes hyperboliques, dont l'intersection donne la position de la source. Les décalages temporels peuvent notamment être estimés par la méthode dite PHAT-GCC (pour « PHAse Transform - Generalized Cross-Correlation », ou « transformation de phase - intercorrélation généralisée ») qui exploite le calcul d'une intercorrélation - ou corrélation croisée - entre signaux préalablement « blanchi » par filtrage. La méthode PHAT-GCC est décrite plus en détail dans l'article de Ch. H. Knapp et G. C. Carter « The Generalized Correlation Method for Estimation of Time Delay », IEEE Transaction on Acoustics, Speech and Signal Processing, Vol. ASSP-24, No. 4, août 1976 pp. 320 - 327. Ces méthodes sont légère computationnellement, mais elles ne sont pas robustes au bruit corrélé provenant de sources multiples et sons sujettes aux « faux positifs ». En outre, elles sont peu robustes à la réverbération, à l'exception de la méthode PHAT-GCC.

- Une troisième approché consiste à synthétiser un faisceau acoustique orientable en additionnant les signaux captés par les différents microphones auxquels a été appliqué un décalage temporel variable, et à identifier l'orientation du faisceau qui maximise la puissance du signal composite ainsi reçu. Les méthodes basées sur cette approche tendent à être peu robustes à la réverbération et au bruit, sauf certaines variantes qui sont cependant très demandeuses de puissance de calcul.

L'article décrit plus particulièrement un procédé combinant la synthèse d'un faisceau acoustique orientable et l'intercorrélation généralisée avec transformation de phase. Cette méthode est dénommée SRP-PHAT (pour « Steered Response Power - PHAse Transform » ou « puissance de réponse dirigée - transformation de phase »). Par rapport à la méthode PHAT-GCC, elle est plus robuste au bruit mais plus sensible à la réverbération.

Une version à puissance de calcul réduite de la méthode SRP est décrite dans l'article de Dmochowski et al. "Fast Steered Response Power Source Localization Using Inverse Mapping of Relative Delays", IEEE International Conférence on Acoustics, Speech and Signal Processing, 2008, pp. 289-292, XP031250545. L'invention vise à procurer un procédé de localisation d'une source sonore présentant des meilleures propriétés d'immunité à la fois au bruit et à la réverbération par rapport aux procédés connus de l'art antérieur, tout en étant suffisamment léger du point de vue computationnel pour être mise en œuvre dans un système embarqué tel qu'un robot humanoïde, en temps réel et en parallèle d'autres tâches.

Conformément à l'invention ce but est atteint par un procédé dérivé de la méthode SRP-PHAT précitée et par un robot humanoïde comportant des moyens de mise en œuvre de ce procédé.

Un objet de l'invention est donc un procédé de localisation d'une source sonore comportant les étapes suivantes :

a) capter des signaux sonores issus d'une source sonore à localiser au moyen d'un ensemble d'au moins trois microphones ;

b) sélectionner au moins trois paires de microphones dudit ensemble et, pour chaque dite paire, calculer une intercorrélation généralisée des signaux sonores captés, ledit calcul étant effectué pour une pluralité de valeurs d'un retard - dit différence de temps interauriculaire - entre lesdits signaux sonores ;

c) à partir desdites intercorrélations généralisées, calculer une puissance de réponse dirigée exprimée en fonction d'un vecteur des différences de temps interauriculaires pour chaque dite paire de microphones ;

d) déterminer le vecteur des différences de temps interauriculaires qui maximise ladite puissance de réponse dirigée ; et

e) estimer une direction de localisation de ladite source sonore en fonction du vecteur des différences de temps interauriculaires déterminé lors de ladite étape d),

caractérisé en ce que :

- lesdites étapes c) et d) sont mises en œuvre en considérant une pluralité de vecteurs des différences de temps interauriculaires formant un ensemble qui comprend : un premier sous-ensemble de vecteurs compatibles avec des signaux sonores provenant d'une source sonore unique à distance infinie desdits microphones ; et un deuxième sous-ensemble de vecteurs qui ne sont pas compatibles avec des signaux sonores provenant d'une source unique à distance infinie desdits microphones ; en ce que :
- chaque vecteur dudit premier sous-ensemble est associé à une direction de localisation de la source sonore unique correspondante, et chaque vecteur dudit deuxième sous-ensemble est associé à la direction de localisation associée à un vecteur dudit premier sous-ensemble qui lui est plus proche selon une métrique prédéfinie ; et en ce que :
- la direction estimée lors de ladite étape e) est celle associée au vecteur des différences de temps interauriculaires déterminé lors de ladite étape d).

Selon des caractéristiques avantageuses d'un tel procédé :

- Les intercorrélations généralisées calculées lors de ladite étape b) peuvent être du type GCC-PHAT, correspondant à l'intercorrélation de signaux préalablement blanchis.
- Lors de ladite étape b), on peut sélectionner toutes les paires de microphones dudit ensemble.
- Ladite puissance de réponse dirigée peut être donnée par, ou proportionnelle à, la somme des intercorrélations généralisées pour lesdites paires de microphones.
- Ledit premier sous-ensemble peut être constitué par les vecteurs dudit ensemble dont les composantes satisfont la condition dite de Chasles :

$$\tau_{ij} + \tau_{jk} = \tau_{ik}$$

où les indices $i \neq j \neq k$ représentent différent microphones dudit ensemble et $\tau_{ij}$, $\tau_{jk}$ et $\tau_{ik}$ représentent les différences de temps interauriculaires pour les paires (i,j), (j,k) et (i,k) respectivement.
- Ledit deuxième sous-ensemble peut être constitué par les vecteurs dudit ensemble n'appartenant pas audit premier sous-ensemble et dont la distance à un vecteur dudit premier sous-ensemble, déterminée selon ladite métrique prédéfinie et après normalisation, est inférieure à un seuil prédéfini.
- Ladite métrique prédéfinie peut être une métrique euclidienne.
- Ladite étape e) peut être mise en œuvre au moyen d'une table de correspondance associant une direction de localisation à chaque valeur dudit ensemble.

Un autre objet de l'invention est un robot humanoïde comprenant :

- un ensemble d'au moins trois microphones; et
- un processeur connecté auxdits microphones pour recevoir en entrée des signaux sonores captés par ces derniers et programmé ou configuré pour mettre en œuvre un procédé selon l'une des revendications précédentes.

Avantageusement, lesdits microphones peuvent être agencés sur une surface supérieure d'une tête dudit robot.

D'autres caractéristiques, détails et avantages de l'invention ressortiront à la lecture de la description faite en référence aux dessins annexés donnés à titre d'exemple et qui représentent, respectivement :

- la figure 1, un diagramme fonctionnel illustrant la mise en œuvre d'un procédé selon un mode de réalisation de l'invention ;
- la figure 2, la disposition des microphones sur la tête d'un robot humanoïde selon un mode de réalisation de l'invention ; et
- Les figures 3A, 4A, 5A, 6A et 7A, des graphiques illustrant les performances d'un procédé selon un mode de réalisation de l'invention ; et
- Les figures 3B, 4B, 5B, 6B et 7B, données à titre de comparaison, des graphiques illustrant les performances d'un procédé selon l'art antérieur.

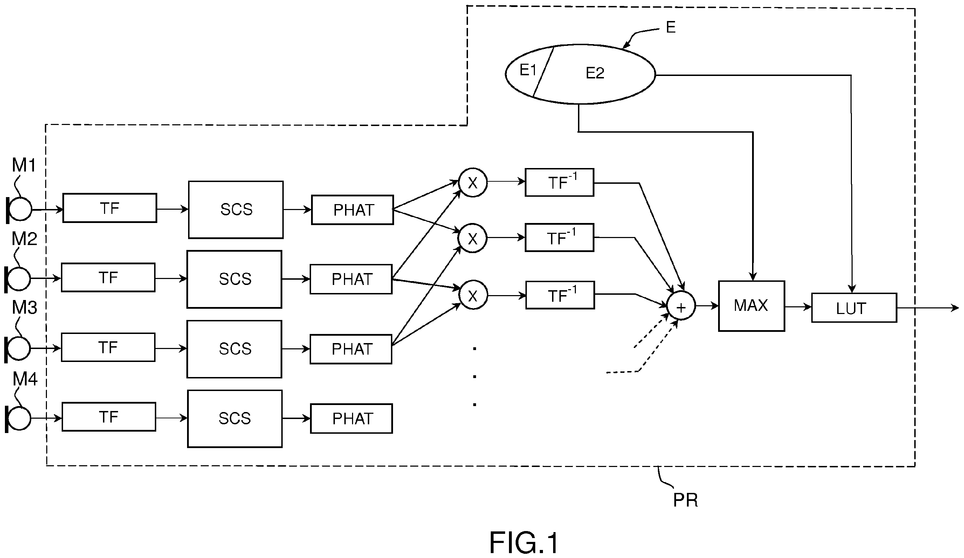

La figure 1 illustre très schématiquement la mise en œuvre d'un procédé selon un mode de réalisation de l'invention au moyen d'un système comprenant un réseau de microphones M1 - M4 et un processeur PR.

Dans le cas de la figure, le réseau comprend quatre microphones, mais leur nombre peut être inférieur (trois au minimum) ou supérieur ; en outre, bien que les microphones soient représentés alignés, leur agencement spatial peut être quelconque. De préférence, on choisira un agencement minimisant les cas de masquage, c'est-à-dire les cas dans lesquels un obstacle s'interpose entre les microphones et les régions d'espace où peut se situer une source sonore à localiser.

Un système réel devrait comprendre également des circuits de conditionnement des signaux issus par les microphones, assurant leur amplification, filtrage, échantillonnage et conversion analogique/numérique. Ces circuits sont omis dans un souci de simplicité et lisibilité de la figure. Dans la suite on considèrera donc que les microphones M1 - M4 fournissent des signaux au format numérique.

Le processeur PR est programmé ou configuré pour réaliser les opérations suivantes :

1. Calcul d'une intercorrélation généralisée des signaux issus des différents microphones, et notamment d'une intercorrélation généralisée de type GCC-PHAT.

Soient $s_i(t)$ et $s_j(t)$ les signaux issus des microphones $M_i$ et $M_j$ ($i,j=1 - 4$ ; $i{\neq}j$). L'intercorrélation généralisée $R_{si,sj}$ de ces signaux est définie comme l'intercorrélation entre ces signaux après un filtrage préalable ; il s'agit d'une fonction d'une variable $\tau$, homogène à un temps et représentative d'un décalage temporel entre les signaux issus des deux microphones (différence de temps interauriculaire). Avantageusement, l'intercorrélation généralisée est calculée dans le domaine de la fréquence :

$$R_{si,sj}(\tau) = \int_{-\infty}^{+\infty} \Phi_i(\omega) S_i(\omega) \Phi_j^*(\omega) S_j^*(\omega) e^{i\omega\tau}\, d\omega \qquad (1)$$

où $S_{i,j}(\omega)$ est la transformée de Fourier du signal $s_{i,j}(t)$, « * » est l'opérateur de conjugaison complexe et $\Phi(\omega)$ est la fonction de transfert d'un filtre. Dans le cas de l'intercorrélation généralisée GCC-PHAT on choisit un filtre « blanchissant » les signaux, c'est-à-dire égalisant l'intensité de toutes leurs composantes spectrales pour ne conserver que l'information de phase :

$$\Phi_{i,PHAT} = \frac{1}{|S_i(\omega)|} \qquad (2)$$

Bien entendu, dans une réalisation pratique du procédé les transformées de Fourier seront des transformées de Fourier discrètes, calculées notamment par l'algorithme de transformée de Fourier rapide (FFT) et les intégrales seront remplacés par des sommes d'un nombre fini de termes.

Ainsi, comme illustré sur la figure 1, les signaux issus des microphones $M_1 - M_4$ sont convertis dans le domaine fréquentiel (blocs FT réalisant une transformée de Fourier discrète, notamment en utilisant l'algorithme de transformée de Fourier rapide ou « FFT »), subissent un seuillage pour supprimer les composantes spectrales dont l'intensité est inférieure à une valeur prédéfinie afin d'éviter que des composantes spectrales contenant principalement ou exclusivement du bruit ne soient amplifiées par le filtre blanchissant (bloc de seuillage spectral SCS) puis sont filtrées par ledit filtre blanchissant PHAT - mais d'autres types de filtrage peuvent être utilisés, voir l'article précité de Ch. H. Knapp et G. C. Carter. Ensuite, les signaux filtrés sont multipliés deux à deux, et leurs produits sont reconvertis dans le domaine temporel (blocs FT$^{-1}$ réalisant une transformée de Fourier discrète inverse, notamment en utilisant l'algorithme de transformée de Fourier rapide ou « FFT »). On obtient ainsi les intercorrélations généralisées des signaux sonores captés par les différents microphones, considérés deux à deux. Il a été choisi de prendre toutes les paires de microphones - au nombre de N(N-1)/2 si N est le nombre de microphones - mais on aurait pu se limiter à considérer trois paires choisies parmi elles, ou toute valeur comprise entre 3 et N(N-1)/2.

Le passage par le domaine fréquentiel n'est pas indispensable pour calculer les intercorrélations, mais est néanmoins très avantageux.

Les calculs étant effectués de façon discrète, chaque intercorrélation généralisée n'est calculée que pour un ensemble discret de valeurs de la différence de temps interauriculaire.

2. Calcul d'une puissance de réponse dirigée SRP (en anglais « Steered Response Power »). Ce calcul est effectué simplement en additionnant les différentes intercorrélations généralisées :

$$SRP(\tau) = \sum_{s_i,s_j} R_{si,sj}(\tau_{si,sj}) \qquad (3)$$

où la somme est effectuée sur M paires de signaux $s_i$, $S_j$ associés à des paires de microphones respectives ($3 \leq M \leq N(N-1)/2$. La variable vectorielle $\tau$ a M composantes, correspondant chacune à la différence de temps interauriculaire pour une dite paire. Plus généralement, on pourrait définir la SRP comme une combinaison linéaire des intercorrélations généralisées.

Il convient de noter que toutes les valeurs de $\tau$ - et donc toutes les combinaisons de valeurs $\tau_{si,sj}$ ne sont pas « physiquement possibles ». En effet, si on considère le cas d'une seule source sonore suffisamment éloignée du réseau de microphones pour que les ondes acoustiques parvenant à ces derniers puissent être considérées planes, la direction de localisation de ladite source est complètement identifiée par deux différences de temps interauriculaires. En d'autres termes, deux composantes du vecteur $\tau$ déterminent de manière univoque (au moins en théorie) les valeurs des autres composantes.

3. Maximisation de la puissance de réponse dirigée

L'identification de la direction de localisation de la source sonore se fait en maximisant la fonction $SRP(\tau)$ par rapport à la variable vectorielle $\tau$. Plusieurs méthodes numériques peuvent être utilisées pour résoudre ce problème d'optimisation ; on peut citer à titre d'exemples non limitatifs les algorithmes de gradient et les méthodes de « force brute ».

Cette maximisation pourrait se faire sous contrainte, en prenant en compte uniquement les valeurs de $\tau$ qui sont « physiquement possibles » au sens explicité plus haut, c'est-à-dire compatibles avec des signaux sonores provenant d'une source unique à distance « infinie ». Cette approche est connue, en particulier, de l'article précité de J. H. DiBiase et al. Cependant, en pratique, elle s'avère peu robuste. En effet, à cause du bruit, des effets de masquage (obstacles interposés entre la source et un ou plusieurs microphones) et, surtout, des effets de réverbération, il est fréquent que le maximum absolu de $SRP(\tau)$ corresponde à une valeur « impossible » de $\tau$.

Conformément à l'invention, afin d'améliorer la robustesse de l'algorithme de localisation spatiale de la source, la recherche du maximum de $SRP(\tau)$ ne se fait pas uniquement sur les valeurs « possibles » de $\tau$, mais également sur des valeurs théoriquement non admissibles, c'est-à-dire incompatibles avec des signaux sonores provenant d'une source unique à distance « infinie ». Plus précisément, comme indiqué sur la figure 1, la maximisation (bloc fonctionnel « MAX ») de la fonction $SRP(\tau)$ est effectuée en considérant des valeurs du vecteur $\tau$ qui forment un ensemble E constitué de deux sous-ensembles :

- Un premier sous-ensemble E1 de vecteurs $\tau$ compatibles avec des signaux sonores provenant d'une source sonore unique à distance infinie du réseau de microphones. Du point de vue mathématique, ces vecteurs ont des composantes qui satisfont aux conditions dites « de Chasles »

$$\tau_{ij}+\tau_{jk}=\tau_{ik} \qquad (4)$$

où les indices $i \neq j \neq k$ représentent différent microphones dudit ensemble et $\tau_{ij}$, $\tau_{jk}$ et $\tau_{ik}$ représentent les différences de temps interauriculaires pour les paires (i,j), (j,k) et (i,k) respectivement. Ces conditions sont nécessaires, mais pas suffisantes, pour qu'un vecteur $\tau$ soit compatible avec des signaux sonores provenant d'une source sonore unique à distance infinie.

- Un deuxième sous-ensemble E2 de vecteurs $\tau$ qui ne sont pas compatibles avec des signaux sonores provenant d'une source sonore unique à distance infinie du réseau de microphones. En particulier, ce deuxième sous-ensemble est constitué par les vecteurs dudit ensemble n'appartenant pas audit premier sous-ensemble et dont la distance à un vecteur dudit premier sous-ensemble, déterminée selon une métrique prédéfinie (notamment euclidienne) et après normalisation (chaque vecteur est divisé par sa norme), est inférieure à un seuil prédéfini. La détermination de ce seuil constitue un réglage du procédé, qui peut être effectué expérimentalement.

Pour sélectionner les vecteurs $\tau$ appartenant à l'ensemble E est les attribuer E aux sous-ensembles E1 et E2 on procède de la façon suivante.

Premièrement, il convient d'écrire, sous forme matricielle, le système d'équation qui lie le vecteur unitaire pointant dans la direction de la source, noté x, au vecteur des différencse de temps interauriculaires $\tau$ :

$$\tau = Ax \tag{5}$$

où A est une matrice Mx3 (on rappelle que M est le nombre de composants du vecteur $\tau$). La matrice A n'étant pas carrée, elle ne peut pas être inversée directement. Si les microphones ne sont pas coplanaires, la matrice A est de rang 3. On peut alors choisir trois lignes linéairement indépendants pour construire une matrice carrée inversible $\tilde{A}$ ; on note $\tilde{\tau}$ le vecteur de dimension 3 obtenu en prenant les trois composants de $\tau$ correspondant auxdits composants indépendants de la matrice A. On a alors :

$$\tilde{\tau} = \tilde{A}x \tag{6}$$

et donc

$$x = \tilde{A}^{-1}\tilde{\tau} \tag{7}$$

Ensuite, on considère un ensemble de départ E' de vecteurs $\tau$, qui correspond à une sphère ou un cube dans $\mathbb{R}^M$ (car on impose une valeur maximale admissible au module de $\tau$ ou à chacune de ses composantes) discrétisée (car on ne considère que des valeurs discrètes de ces composantes).

Pour chaque vecteur $\tau$ de E', on calcule sa projection $\bar{\tau}$ dans le sous-espace des vecteurs qui vérifient les relations de Chasles de dimensions 3. Si la différence $d_1 = |\tau - \bar{\tau}|$ dépasse un seuil prédéfini $\varepsilon$, le vecteur n'est pas retenu. Sinon, on extrait le vecteur $\tilde{\bar{\tau}}$ de $\bar{\tau}$ (c'est-à-dire le vecteur de ses trois composants linéairement indépendants) et on calcule la distance $d_2$ donnée par :

$$d_2 = \left| \frac{\sqrt{\|\tau\| - d_1^2}}{\|x\|} - 1 \right| \tag{8}$$

L'équation (8) indique qu'en raccourcissant le vecteur $\tilde{\bar{\tau}}$ de la valeur $d_2$ sans modifier sa direction, ce dernier devient de norme unitaire.

Si $d = \sqrt{d_1^2 + d_2^2}$ est inférieur au seuil $\varepsilon$, le vecteur $\tau$ fait donc partie de l'ensemble E (du sous-ensemble E1 si d=0, du sous-ensemble E2 autrement ; on remarquera toutefois que cette distinction n'est pas opérationnelle, tous les vecteurs de l'ensemble E sont traités de la même façon).

L'équation 7 permet d'associer à chaque dit vecteur une direction de localisation de la source.

Ces calculs étant très lourds, il est avantageux de les effectuer une seule fois, et de stocker les résultats dans un tableau de correspondance (voir ci-après).

4. Identification de la direction de localisation de la source sonore.

Après avoir identifié le vecteur $\tau \in$ E qui maximise $SRP(\tau)$ - indiqué par $\tau_{max}$, il faut l'associer à une direction de localisation de la source sonore. Si $\tau_{max} \in$ E1, cela ne pose pas de problème, car le vecteur des différences de temps interauriculaires est alors compatible avec une et une seule direction de localisation. Si $\tau_{max} \in$ E2, on choisit la direction de localisation compatible avec le vecteur appartenant à E1 qui est le plus proche de $\tau_{max}$ selon ladite métrique prédéfinie.

Avantageusement, chaque vecteur de l'ensemble E est associé une fois pour toutes à une direction de localisation. Chaque vecteur de l'ensemble et la direction de localisation qui lui est associée sont stockées dans un fichier chargé dans une mémoire du processeur pour former une table de correspondance (référence LUT, de l'anglais « Look-Up Table »), construite de la façon décrite plus haut. Ainsi, la détermination de la direction de localisation de la source à partir de la valeur de $\tau_{max}$ se fait par simple lecture de la table.

Avantageusement, le fichier contenant la table de correspondance est organisé de la façon suivante (en considérant des vecteurs $\tau$ à six composantes) :

| Indice | Vecteur $\tau$ | (azimut, élévation) | {voisins} |
|--------|----------------|---------------------|-----------|
| 0 | (0,6,6,6,6,0) | (0°, 30°) | {2,3} |

(suite)

| Indice | Vecteur $\tau$ | (azimut, élévation) | {voisins} |
|---|---|---|---|
| 1 | (0,0,0,0,0,0) | (0°, 90°) | {} |
| 2 | (1,6,6,6,6,0) | (3°, 28°) | {0,3} |
| 3 | (1,7,6,6,6,0) | (5°, 27°) | {0,2} |

L'indice n'est pas explicitement écrit dans le fichier, il découle de l'ordre. Le champ « voisins » contient les indices des vecteurs qui ont des écarts inférieurs ou égaux à 1 (ou à une autre valeur prédéfinie) sur chacune des composantes. Ce champ sert à faciliter la mise en œuvre d'un algorithme de gradient pour la maximisation de la SRP.

Lorsque le processeur démarre, il charge en mémoire le contenu du fichier contenant la table de correspondance. À chaque fois qu'un son est détecté, il calcule les valeurs de SRP($\tau$) pour tous les vecteurs $\tau$ stockés dans la table de correspondance, puis cherche le maximum de ces valeurs, identifie le vecteur $\tau$ correspondant et lit dans la table de correspondance les valeurs d'azimut et d'élévation qui lui sont associées. En variante, le processeur pourrait chercher les N>1 plus grands maxima locaux de SRP($\tau$) pour effectuer une multi-localisation (localisation simultanée de plusieurs sources) ; mais cette approche s'avère peu robuste.

Le processeur PR, dont le fonctionnement a été illustré à l'aide de la figure 1, peut comprendre un microprocesseur programmé de manière opportune couplé à une ou plusieurs mémoires pour stocker l'ensemble E et la table de correspondance LUT. Ce microprocesseur peut être dédié à la localisation des sources sonores ou accomplir également d'autres tâches ; à la limite, il peut s'agir du processeur unique d'un ordinateur portable ou de bureau ou d'un robot très simple. De même, l'ensemble E et la table de correspondance LUT peuvent être stockés dans une unité de mémoire dédiée ou dans une mémoire centrale. Le processeur peut également comprendre des circuits logiques dédiés, programmables ou pas.

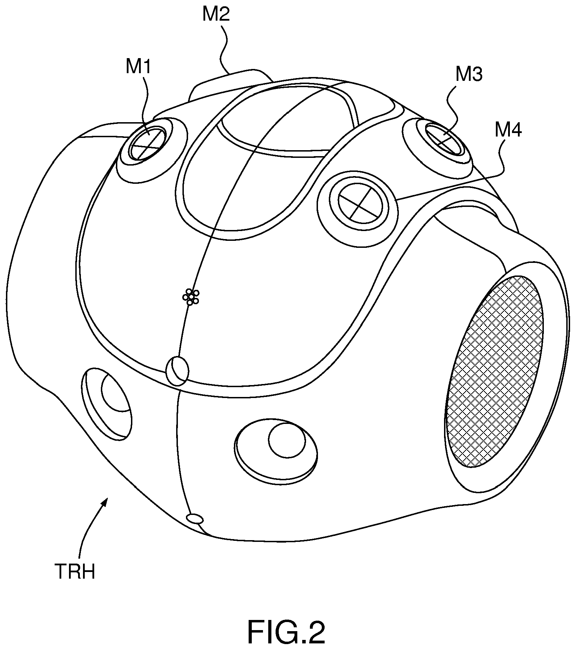

La figure 2 représente la tête TRH d'un robot humanoïde adapté pour la mise en œuvre de l'invention, comprenant un réseau de quatre microphones $M_1$ - $M_4$ agencés sur une surface supérieure de ladite tête. Cet agencement permet d'éviter tout effet de masquage lorsque la source sonore est située à une hauteur supérieure à celle de la tête du robot. Cela convient particulièrement bien à la détection et localisation d'un interlocuteur humain de la part d'un robot humanoïde présentant une taille inférieure à celle de la plupart des êtres humains, par exemple entre 50 et 150 cm. La distance entre deux microphones adjacents peut être comprise, à titre indicatif, entre 3 et 30 cm.

Le procédé de l'invention a été testé en équipant de microphones, conformément à la figure 2, un robot « Nao » produit par la société demanderesse. Le robot et une source sonore ont été placés dans une salle ordinaire, présentant une réverbération « normale », avec la source agencée devant le robot, à sa droite, à sa gauche, à l'avant-droite (à un angle de -45° par rapport à un axe arrière-avant) et à làvant-gauche (à un angle de +45° par rapport à un axe arrière-avant). La source sonore était un équipement de reproduction sonore émettant des signaux vocaux. La localisation a été effectuée en considérant des fenêtres de calcul de 1024 échantillons chacune. Plusieurs essais ont été répétés, et les directions de localisation déterminées par le robot (identifiées par un azimut et un angle d'élévation) ont été regroupées pour former des histogrammes.

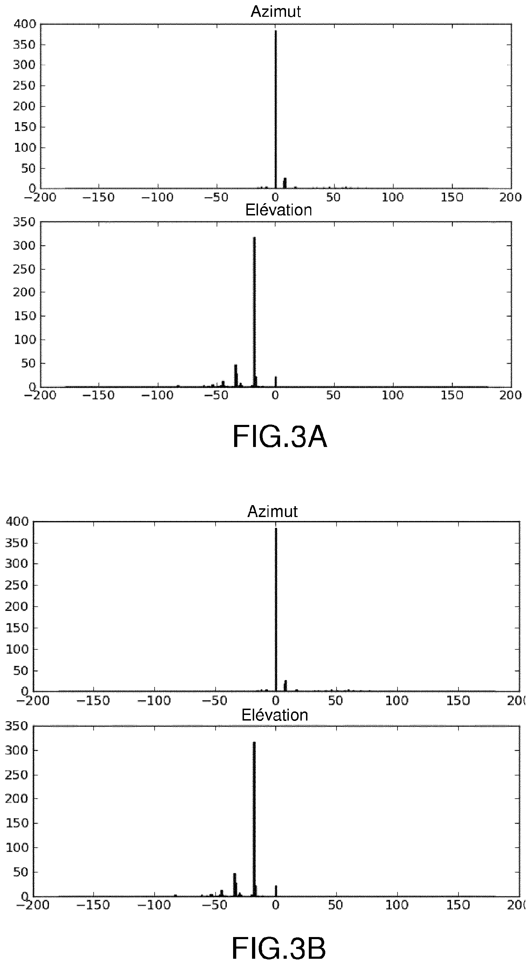

Les figures 3A/3B correspondent à une source localisée devant le robot (azimut théorique : 0°).

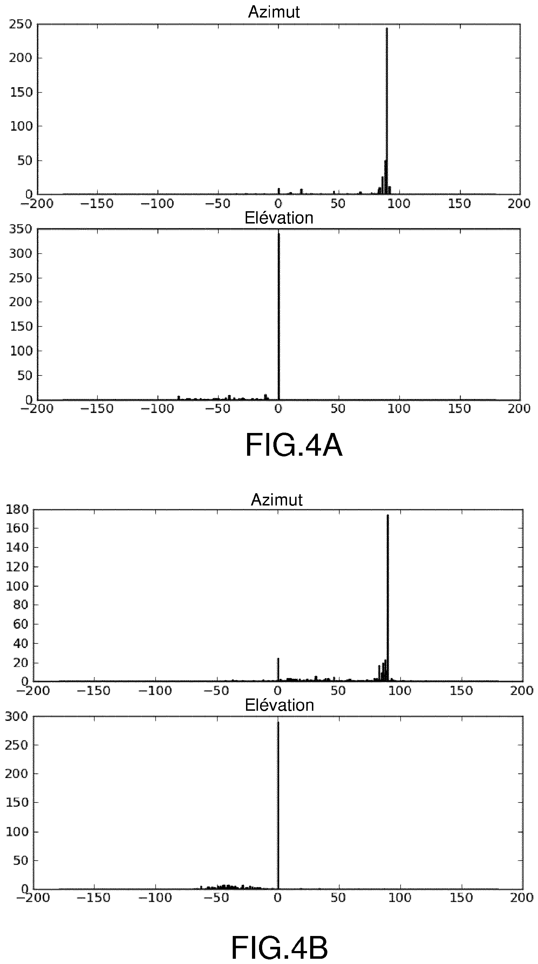

Les figures 4A/4B correspondent à une source localisée à la gauche du robot (azimut nominal : 90°).

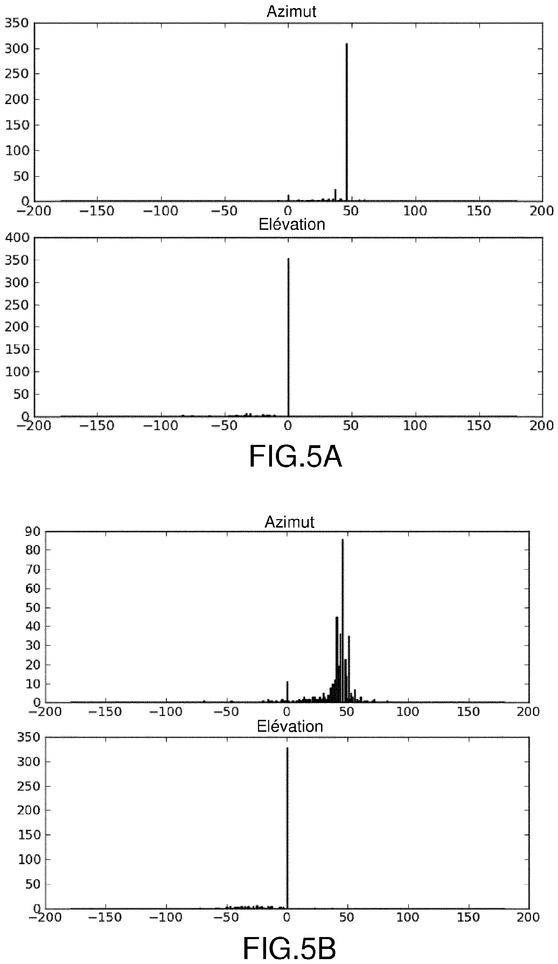

Les figures 5A/5B correspondent à une source localisée à l'avant-gauche du robot (azimut nominal : 45°).

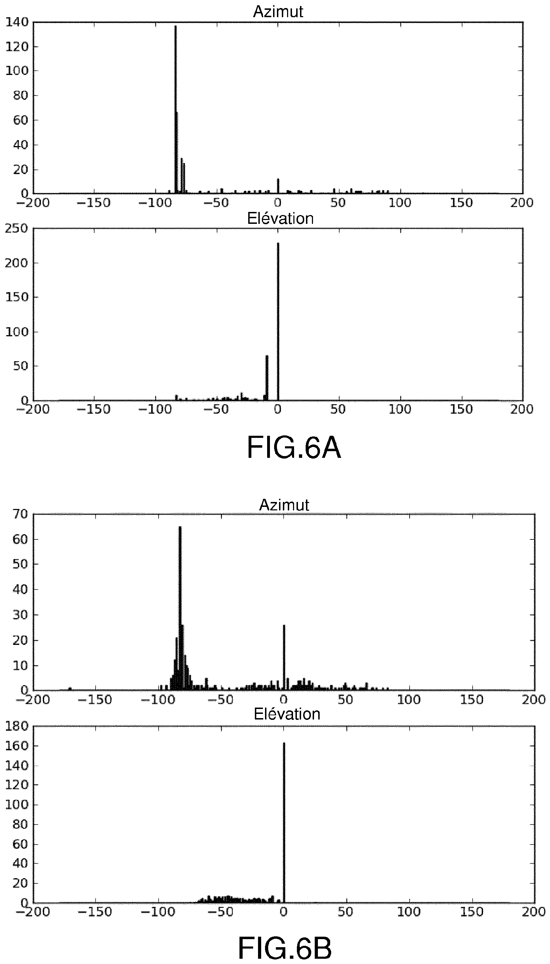

Les figures 6A/6B correspondent à une source localisée à la droite du robot (azimut nominal : -90°).

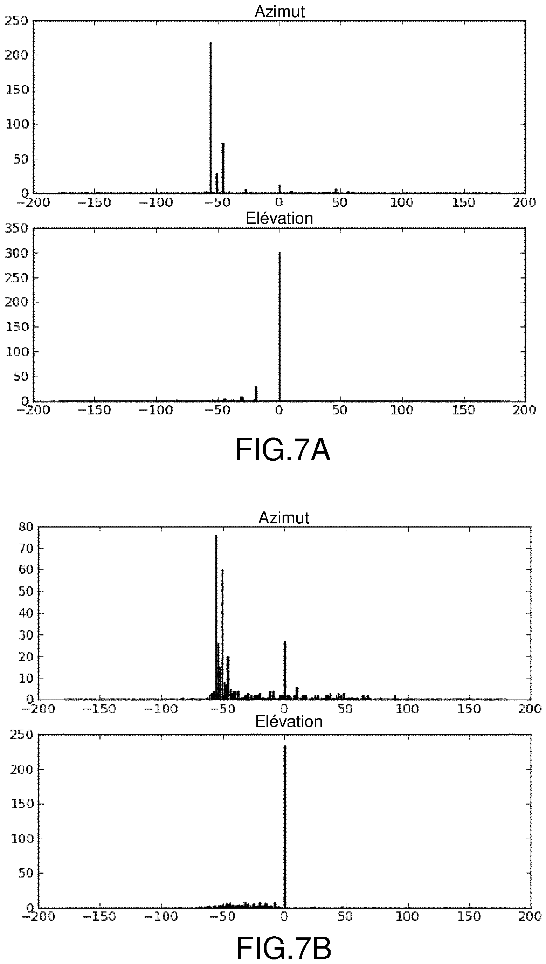

Les figures 7A/7B correspondent à une source localisée à l'avant- droite du robot (azimut nominal : -45°).

L'élévation nominale n'a pas été mesurée. En effet, dans les applications robotiques visées à titre principal, l'élévation est moins importante que l'azimut.

Les figures « A » se rapportent au procédé de l'invention, tel que décrit plus haut. Les figures « B » sont données à titre de comparaison et ont été obtenues au moyen d'une méthode TDOA classique. Dans cette méthode de référence, la localisation est considérée en échec lorsque la valeur maximale de SRP, normalisée, est inférieure à un seuil prédéfini. Plus généralement, même dans une méthode selon l'invention, cette valeur maximale normalisée peut être considérée un indicateur de confiance de la localisation. La normalisation se fait par rapport à :

$$\lambda = \sum_{s_i s_{ij}} \sqrt{W(s_i)W(s_j)}$$

où $W(s_i)$ et $W(s_j)$ sont les énergies des signaux issus des microphones $i$ et $j$ blanchis.

On peut remarquer que, dans le cas de l'invention (figures « A »), la grande majorité des essais conduit à une estimation satisfaisante, à quelques degrés près, de l'azimut de la source, tandis que la méthode de référence (figures « B ») présente un taux d'échec assez élevé. Il convient de souligner que, dans les applications robotiques visées à titre principal, on ne demande pas une précision élevée (une erreur de localisation de quelques degrés est sans incidence), mais plutôt une grande robustesse couplée à une relative simplicité computationnelle.

## Revendications

1. Procédé de localisation d'une source sonore comportant les étapes suivantes :

   a) capter des signaux sonores issus d'une source sonore à localiser au moyen d'un ensemble d'au moins trois microphones (M1, M2, M3, M4) ;
   b) sélectionner au moins trois paires de microphones dudit ensemble et, pour chaque dite paire, calculer une intercorrélation généralisée des signaux sonores captés, ledit calcul étant effectué pour une pluralité de valeurs d'un retard - dit différence de temps interauriculaire - entre lesdits signaux sonores ;
   c) à partir desdites intercorrélations généralisées, calculer une puissance de réponse dirigée exprimée en fonction d'un vecteur des différences de temps interauriculaires pour chaque dite paire de microphones ;
   d) déterminer le vecteur des différences de temps interauriculaires qui maximise ladite puissance de réponse dirigée ; et
   e) estimer une direction de localisation de ladite source sonore en fonction du vecteur des différences de temps interauriculaires déterminé lors de ladite étape d),

   **caractérisé en ce que** :

   - lesdites étapes c) et d) sont mises en œuvre en considérant une pluralité de vecteurs des différences de temps interauriculaires formant un ensemble (E) qui comprend : un premier sous-ensemble (E1) de vecteurs compatibles avec des signaux sonores provenant d'une source sonore unique à distance infinie desdits microphones ; et un deuxième sous-ensemble (E2) de vecteurs qui ne sont pas compatibles avec des signaux sonores provenant d'une source unique à distance infinie desdits microphones ; **en ce que** :
   - chaque vecteur dudit premier sous-ensemble est associé à une direction de localisation de la source sonore unique correspondante, et chaque vecteur dudit deuxième sous-ensemble est associé à la direction de localisation associée à un vecteur dudit premier sous-ensemble qui lui est plus proche selon une métrique prédéfinie ; et **en ce que** :
   - la direction estimée lors de ladite étape e) est celle associée au vecteur des différences de temps interauriculaires déterminé lors de ladite étape d).

2. Procédé selon la revendication 1 dans lequel les intercorrélations généralisées calculées lors de ladite étape b) sont du type GCC-PHAT, correspondant à l'intercorrélation de signaux préalablement blanchis.

3. Procédé selon l'une des revendications précédentes dans lequel, lors de ladite étape b), on sélectionne toutes les paires de microphones dudit ensemble.

4. Procédé selon l'une des revendications précédentes dans lequel ladite puissance de réponse dirigée est donnée par, ou proportionnelle à, la somme des intercorrélations généralisées pour lesdites paires de microphones.

5. Procédé selon l'une des revendications précédentes dans lequel ledit premier sous-ensemble est constitué par les vecteurs dudit ensemble dont les composantes satisfont la condition dite de Chasles :

$$\tau_{ij}+\tau_{jk}=\tau_{ik}$$

où les indices $i{\neq}j{\neq}k$ représentent différent microphones dudit ensemble et $\tau_{ij}$, $\tau_{jk}$ et $\tau_{ik}$ représentent les différences de temps interauriculaires pour les paires (i,j), (j,k) et (i,k) respectivement.

6. Procédé selon l'une des revendications précédentes dans lequel ledit deuxième sous-ensemble est constitué par les vecteurs dudit ensemble n'appartenant pas audit premier sous-ensemble et dont la distance à un vecteur dudit premier sous-ensemble, déterminée selon ladite métrique prédéfinie et après normalisation, est inférieure à un seuil prédéfini.

7. Procédé selon l'une des revendications précédentes dans lequel ladite métrique prédéfinie est une métrique euclidienne.

8. Procédé selon l'une des revendications précédentes dans lequel ladite étape e) est mise en œuvre au moyen d'une table de correspondance (LUT) associant une direction de localisation à chaque valeur dudit ensemble.

9. Robot humanoïde comprenant :

   - un ensemble d'au moins trois microphones (M1, M2, M3, M4) ; et
   - un processeur (PR) connecté auxdits microphones pour recevoir en entrée des signaux sonores captés par ces derniers et programmé ou configuré pour mettre en œuvre un procédé selon l'une des revendications précédentes.

10. Robot humanoïde selon la revendication 9 dans lequel lesdits microphones sont agencés sur une surface supérieure d'une tête (TRH) dudit robot.

**Patentansprüche**

1. Verfahren zum Lokalisieren einer Tonquelle, das die folgenden Schritte beinhaltet:

   (a) Erfassen von Tonsignalen, die von einer zu lokalisierenden Tonquelle kommen, mittels eines Satzes von wenigstens drei Mikrofonen (M1, M2, M3, M4),
   (b) Auswählen von wenigstens drei Mikrofonpaaren aus dem Satz und Berechnen einer generalisierten Interkorrelation der erfassten Tonsignale für jedes Paar, wobei die Berechnung für mehrere Werte einer Verzögerung - interaurikuläre Zeitdifferenz genannt - zwischen den Tonsignalen durchgeführt wird;
   (c) Berechnen, auf der Basis der generalisierten Interkorrelationen, einer gerichteten Antwortleistung, ausgedrückt als Funktion eines Vektors der interaurikulären Zeitdifferenzen für jedes Mikrofonpaar;
   d) Bestimmen des Vektors der interaurikulären Zeitdifferenzen, der die gerichtete Antwortleistung maximiert; und
   e) Schätzen einer Lokalisierungsrichtung der Tonquelle als Funktion des in Schritt d) bestimmten Vektors der interaurikulären Zeitdifferenzen,

   **dadurch gekennzeichnet, dass**:

   - die Schritte c) und d) unter Berücksichtigung mehrerer Vektoren der interaurikulären Zeitdifferenzen implementiert werden, die einen Satz (E) bilden, der Folgendes umfasst: einen ersten Teilsatz (E1) von Vektoren, die mit Tonsignalen kompatibel sind, die von einer einzigen Tonquelle in unendlichem Abstand von den Mikrofonen kommen; und einen zweiten Teilsatz (E2) von Vektoren, die nicht mit Tonsignalen kompatibel sind, die von einer einzigen Quelle in unendlichem Abstand von den Mikrofonen kommen; **dadurch gekennzeichnet, dass**:
   - jeder Vektor des ersten Teilsatzes mit einer Lokalisierungsrichtung der entsprechenden einzigen Tonquelle assoziiert ist und jeder Vektor des zweiten Teilsatzes mit der Lokalisierungsrichtung assoziiert ist, die mit einem Vektor des ersten Teilsatzes assoziiert ist, der ihm gemäß einer vordefinierten Metrik näher ist; und dadurch, dass
   - die in Schritt e) geschätzte Richtung die ist, die mit dem in Schritt d) bestimmten Vektor der interaurikulären Zeitdifferenzen assoziiert ist.

2. Verfahren nach Anspruch 1, bei dem die in Schritt b) berechneten generalisierten Interkorrelationen vom Typ GCC-PHAT entsprechend der Zwischenkorrelation von zuvor gebleichten Signalen sind.

3. Verfahren nach einem der vorhergehenden Ansprüche, bei dem in Schritt b) alle Mikrofonpaare des Satzes ausgewählt werden.

4. Verfahren nach einem der vorhergehenden Ansprüche, bei dem die gerichtete Antwortleistung durch die Summe der generalisierten Interkorrelationen für die Mikrofonpaare oder proportional dazu gegeben wird.

5. Verfahren nach einem der vorhergehenden Ansprüche, bei dem der erste Teilsatz durch die Vektoren des Satzes bebildet wird, deren Komponenten die sogenannte Chasles-Bedingung erfüllen:

$$\tau_{ij}+\tau_{jk}=\tau_{ik}$$

wobei die Indexe $i{\neq}j{\neq}k$ verschiedene Mikrofone des Satzes repräsentieren und $\tau_{ij}$, $\tau_{jk}$ und $\tau_{ik}$ die interaurikulären Zeitdifferenzen für die Paare (i,j), (j,k) bzw. (i,k) repräsentieren.

6. Verfahren nach einem der vorhergehenden Ansprüche, bei dem der zweite Teilsatz durch die Vektoren des Satzes gebildet wird, die nicht zum ersten Teilsatz gehören und deren Abstand zu einem Vektor des ersten Teilsatzes, bestimmt gemäß der vordefinierten Metrik und nach Normalisierung, kleiner als ein vordefinierter Schwellenwert ist.

7. Verfahren nach einem der vorhergehenden Ansprüche, bei dem die vordefinierte Metrik eine euklidische Metrik ist.

8. Verfahren nach einem der vorhergehenden Ansprüche, bei dem Schritt e) mittels einer Korrespondenztabelle (LUT) durchgeführt wird, die mit jedem Wert des Satzes eine Lokalierungsrichtung assoziiert.

9. Humanoider Roboter, der Folgendes umfasst:

- einen Satz von wenigstens drei Mikrofonen (M1, M2, M3, M4); und
- einen mit den Mikrofonen verbundenen Prozessor (PR) zum Empfangen, am Eingang, von von diesen erfassten Tonsignalen und programmiert oder konfiguriert zum Durchführen eines Verfahrens nach einem der vorherigen Ansprüche.

10. Humanoider Roboter nach Anspruch 9, bei dem die Mikrofone auf einer Oberfläche eines Kopfes (TRH) des Roboters angeordnet sind.

**Claims**

1. A method for localizing a sound source including the following steps:

a) capturing sound signals issued from a sound source to be localized by means of a set of at least three microphones (M1, M2, M3, M4);
b) selecting at least three pairs of microphones from said set and, for each said pair, calculating a generalized intercorrelation of the captured sound signals, said calculation being carried out for a plurality of values of a delay - called the interaural time difference - between said sound signals;
c) from said generalized intercorrelations, calculating a steered response power expressed as a function of a vector of the interaural time differences for each said pair of microphones;
d) determining the interaural time difference vector that maximizes said steered response power; and
e) estimating a localization direction of said sound source as a function of the interaural time difference vector determined in step d),

**characterized in that**:

- said steps c) and d) are implemented by considering a plurality of interaural time difference vectors forming a set (E) that comprises: a first subset (E1) of vectors compatible with sound signals originating from a single sound source at infinite distance from said microphones; and a second subset (E2) of vectors that are not compatible with sound signals originating from a single source at infinite distance from said microphones; **in that**:
- each vector of said first subset is associated with a localization direction of the corresponding single sound source, and each vector of said second subset is associated with the localization direction associated with a vector of said first subset that is closer thereto according to a predefined metric; and **in that**:
- the direction estimated in said step e) is that associated with the interaural time difference vector determined in said step d).

2. The method as claimed in claim 1, wherein the generalized intercorrelations calculated in said step b) are of the GCC-PHAT type, corresponding to the intercorrelation of previously whitened signals.

3. The method as claimed in one of the preceding claims, wherein, in said step b), all the pairs of microphones of said set are selected.

4. The method as claimed in one of the preceding claims, wherein said steered response power is given by, or proportional to, the sum of the generalized intercorrelations for said pairs of microphones.

5. The method as claimed in one of the preceding claims, wherein said first subset consists of the vectors of said set the components of which meet what is referred to as the Chasles condition:

$$\tau_{ij} + \tau_{jk} = \tau_{ik}$$

where the indices $i \neq j \neq k$ represent various microphones of said set and $\tau_{ij}$, $\tau_{jk}$ and $\tau_{ik}$ represent the interaural time differences for the pairs (i,j), (j,k) and (i,k), respectively.

6. The method as claimed in one of the preceding claims, wherein said second subset consists of the vectors of said set not belonging to said first subset and the distance of which to a vector of said first subset, which distance is determined according to said predefined metric and after normalization, is below a predefined threshold.

7. The method as claimed in one of the preceding claims, wherein said predefined metric is a Euclidean metric.

8. The method as claimed in one of the preceding claims, wherein said step e) is implemented by means of a lookup table (LUT) associating one localization direction with each value of said set.

9. A humanoid robot comprising:

   - a set of at least three microphones (M1, M2, M3, M4); and
   - a processor (PR) connected to said microphones in order to receive as input sound signals captured by the latter, said processor being programmed or configured to implement a method according to one of the preceding claims.

10. The humanoid robot as claimed in claim 9, wherein said microphones are arranged on an upper surface of a head (TRH) of said robot.

FIG.1

FIG.2

FIG.3A

FIG.3B

FIG.4A

FIG.4B

FIG.5A

FIG.5B

16

FIG.6A

FIG.6B

FIG.7A

FIG.7B

18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Robust localization in reverberant rooms. **J. DIBIASE et al.** Microphone Arrays: Signal Processing Techniques and Applications. Springer-Verlag, 2001
- **CH. H. KNAPP ; G. C. CARTER.** The Generalized Correlation Method for Estimation of Time Delay. *IEEE Transaction on Acoustics, Speech and Signal Processing,* Août 1976, vol. ASSP-24 (4), 320-327

- **DMOCHOWSKI et al.** Fast Steered Response Power Source Localization Using Inverse Mapping of Relative Delays. *IEEE International Conférence on Acoustics, Speech and Signal Processing,* 2008, 289-292